# FASCICULE DE BREVET EUROPEEN

(11) **EP 2 778 494 B1**
(45) Date de publication et mention de la délivrance du brevet: **20.07.2016**
(21) Numéro de dépôt: 14158815.2
(22) Date de dépôt: 11.03.2014
(51) Int. Cl.: F16L 37/138, F16L 37/23

(54) **Elément femelle de raccord rapide et raccord rapide incluant un tel élément femelle**
Schnellverbindungssteckerelement und Schnellverbindung, die ein solches Element umfasst
Female quick-connection element and quick connection including such a female element

(30) Priorité: 12.03.2013 FR 1352202
(43) Date de publication de la demande: 17.09.2014
(73) Titulaire: STÄUBLI FAVERGES, 74210 Faverges (FR)
(72) Inventeur: Tiberghien, Alain-Christophe, 74320 SEVRIER (FR); Chambaud, Antoine, 74210 GIEZ (FR)
(74) Mandataire: Myon, Gérard Jean-Pierre

(56) Documents cités:
- US-A1- 2009 243 286
- US-A1- 2013 174 928

## Description

L'invention concerne un élément femelle de raccord rapide pour la jonction de deux canalisations de fluide sous pression. L'invention concerne également un raccord rapide comprenant un tel élément femelle.

Dans le domaine des raccords de fluide sous haute pression, notamment adaptés au transfert d'hydrogène, pour lequel la pression du fluide peut avoisiner les 800 bars, il est connu de sécuriser le raccord en empêchant la déconnexion d'un élément mâle et d'un élément femelle lorsque la pression du fluide est trop importante. En effet, le coup de fouet qui peut survenir lorsque la pression est importante, lors de la déconnexion, est dangereux pour l'opérateur qui manipule le raccord.

Pour ce faire, il est connu, notamment de EP-A-1 745 237, d'utiliser un piston radialement déplacé par la pression du fluide circulant dans le raccord vers une position de blocage, dans laquelle une bague de verrouillage est bloquée en position verrouillée. Lorsque la bague de verrouillage est en position avant de verrouillage, et que l'élément mâle est verrouillé en position accouplée dans l'élément femelle, par exemple à l'aide de billes de verrouillage, le déverrouillage du raccord est impossible, car une tige du piston faisant saillie en dehors du corps de l'élément femelle empêche le mouvement de la bague de verrouillage vers sa position de déverrouillage. Lorsque la pression du fluide circulant dans le raccord diminue en dessous d'un niveau de pression prédéterminé, un ressort monté dans le même logement que le piston rétracte le piston pour que la bague de verrouillage puisse être à nouveau déplacée en position de déverrouillage, et que le raccord puisse être désaccouplé sans danger pour l'opérateur.

Des dispositifs similaires, dans lesquels un ressort est monté dans le même logement que le piston, sont également connus de US-A-2009/243286 et US-A-2013/174928.

Ce type de construction présente plusieurs inconvénients. Du fait du faible espace disponible pour le ressort dans le logement du piston, il est difficile de garantir un effort de rappel sensiblement constant sur la course de compression du ressort. Cet inconvénient s'avère problématique lorsque les pressions de blocage et de déblocage doivent être équivalentes. En outre, lorsque le piston bloque la bague de verrouillage, si l'opérateur cherche à actionner la bague de verrouillage, le piston est sollicité en flexion, ce qui peut induire une fuite au niveau de l'étanchéité du piston du fait de sa faible longueur.

C'est à ces inconvénients qu'entend remédier l'invention en proposant un nouvel élément femelle de raccord rapide dont le système de blocage de la bague de verrouillage garantit un fonctionnement amélioré.

A cet effet, l'invention concerne un élément femelle de raccord rapide, pour la jonction de deux canalisations de fluide sous pression, cet élément femelle de raccord étant apte à coopérer, selon un axe longitudinal de l'élément femelle, avec un élément mâle complémentaire de raccord, l'élément femelle de raccord comprenant un corps traversé par un conduit de circulation de fluide, au moins un organe de verrouillage mobile entre une position de verrouillage de l'élément mâle par rapport au corps de l'élément femelle de raccord dans une configuration accouplée du raccord, et une position de déverrouillage, dans laquelle les éléments femelle et mâle de raccord peuvent être désaccouplés, une bague de commande mobile en translation selon l'axe longitudinal entre une première position dans laquelle chaque organe de verrouillage est maintenu dans sa position de verrouillage, et une seconde position, dans laquelle chaque organe de verrouillage est apte à se déplacer dans sa position de déverrouillage, un piston comprenant une surface active en contact fluidique avec ledit conduit et étant mobile de manière étanche dans un logement traversant le corps selon une direction transversale depuis le conduit de circulation de fluide vers l'extérieur du corps, le piston s'étendant à partir de la surface active à l'opposé du conduit de circulation de fluide, un organe de blocage dont le mouvement parallèlement à la direction transversale est solidaire du mouvement du piston, le piston étant mobile depuis une position interne, dans laquelle l'organe de blocage ne bloque pas le mouvement de la bague de commande, vers une position externe dans laquelle l'organe de blocage empêche la translation de la bague de commande jusqu'à sa seconde position, et au moins un élément de rappel élastique du piston vers sa position interne.

Cet élément femelle de raccord est caractérisé en ce que l'élément de rappel élastique est monté dans un logement du corps de l'élément femelle de raccord situé hors du logement du piston, le logement de l'élément de rappel élastique étant isolé fluidiquement du conduit de circulation de fluide, et en ce que l'élément femelle de raccord comprend des moyens de transmission, disposés entre l'élément de rappel et le piston, pour rappeler le piston vers sa position interne.

Grâce à l'invention, comme l'élément de rappel n'est pas logé dans le logement du piston, il peut bénéficier d'une course plus importante, ce qui permet une meilleure maîtrise des efforts de rappel du piston.

Selon des aspects avantageux mais non obligatoires de l'invention, un tel élément femelle de raccord rapide peut incorporer une ou plusieurs des caractéristiques suivantes, prises dans toute combinaison techniquement admissible :
- Le logement de l'élément de rappel élastique est ménagé dans le corps à l'opposé du logement du piston par rapport à l'axe longitudinal.
- L'organe de blocage comprend une surface latérale adaptée pour recevoir en appui surfacique, selon l'axe longitudinal de l'élément femelle de raccord, une surface axiale de la bague de commande.
- Lesdits moyens de transmission sont montés à l'extérieur du corps de l'élément femelle de raccord.
- L'organe de blocage est un anneau rigide entourant le corps et le piston.
- L'élément femelle de raccord rapide comprend une rainure, ménagée dans une surface externe du corps, dans laquelle débouche le logement du piston, et adaptée pour guider l'anneau de blocage selon la direction transversale de l'élément femelle de raccord.
- Lesdits moyens de transmission sont formés par l'anneau de blocage.
- L'élément femelle de raccord rapide comprend un poussoir disposé entre l'élément de rappel élastique et l'anneau de blocage.
- Le poussoir et/ou le piston comprennent une surface externe curviligne adaptée pour coopérer avec une surface cylindrique interne de l'anneau de blocage, alors que le rayon de courbure de la surface externe curviligne du poussoir et/ou du piston, est sensiblement égal au rayon de courbure de la surface cylindrique interne de l'anneau de blocage.
- Lesdits moyens de transmission comprennent une tige s'étendant dans le logement de l'élément de rappel élastique jusqu'au piston à travers le conduit de circulation de fluide.
- L'organe de blocage est une extrémité externe du piston adaptée pour coopérer, selon l'axe longitudinal de l'élément femelle de raccord, avec une surface axiale de la bague de commande.
- L'organe de blocage est adapté pour coopérer avec une surface axiale de la bague de commande lorsque ladite bague est dans sa première position.
- Le corps forme un épaulement externe en arrière du logement du piston, alors qu'une bague externe au corps recouvre radialement l'organe de blocage et l'épaulement externe en configurations accouplée et désaccouplée du raccord ainsi que pendant la manoeuvre d'accouplement et de désaccouplement du raccord.
- L'élément femelle de raccord rapide comprend une soupape d'obturation du conduit.

L'invention concerne également un raccord rapide pour la jonction de deux canalisations de fluide sous pression, comprenant un élément femelle tel que décrit ci-dessus et un élément mâle de raccord complémentaire.

L'invention sera mieux comprise et d'autres avantages de celle-ci apparaîtront plus clairement à la lumière de la description qui va suivre d'un élément femelle de raccord rapide et d'un raccord rapide conformes à l'invention, faite à titre d'exemple non limitatif et en référence aux dessins annexés dans lesquels :
- la figure 1 est une coupe longitudinale d'un élément femelle de raccord conforme à l'invention en configuration désaccouplée;
- la figure 2 est une vue similaire à la figure 1, d'un raccord rapide conforme à l'invention incluant l'élément femelle de raccord de la figure 1 et un élément mâle de raccord, en cours d'accouplement ;
- la figure 3 est une vue similaire à la figure 2, l'élément mâle du raccord étant accouplé et verrouillé dans l'élément femelle ;
- la figure 4 est une vue similaire aux figures 2 à 3, dans une configuration bloquée d'une bague de verrouillage de l'élément femelle accouplé à l'élément mâle;
- la figure 5 est une coupe selon le plan V-V à la figure 3, de l'élément femelle de la figure 1 ;
- la figure 6 est une vue similaire à la figure 5, dans la configuration de la figure 4 ;
- la figure 7 est une vue similaire aux figures 2 à 4, d'un raccord comprenant un élément femelle conforme à un deuxième mode de réalisation de l'invention représenté en configuration accouplée;
- la figure 8 est une vue similaire aux figures 2 à 4, d'un raccord comprenant un élément femelle conforme à un troisième mode de réalisation de l'invention représenté en configuration accouplée.

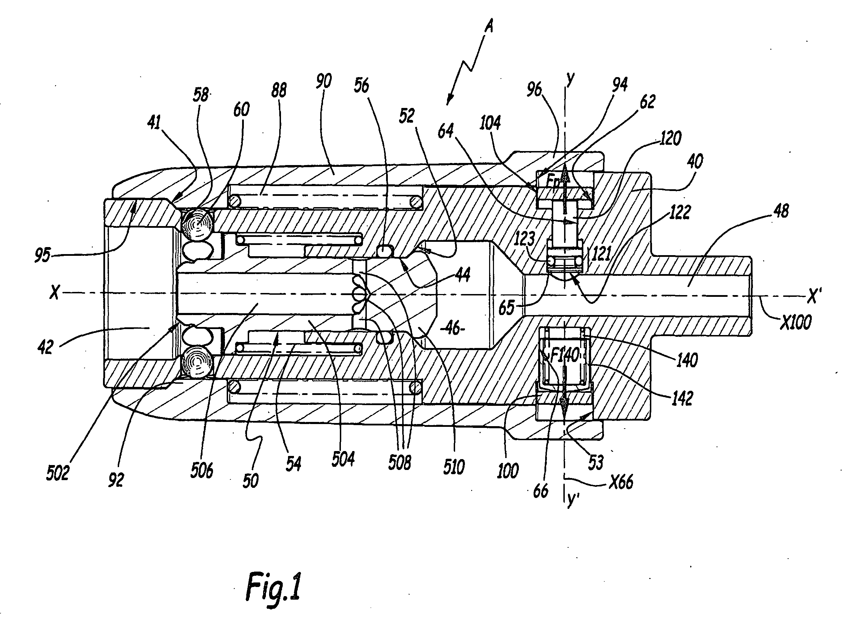

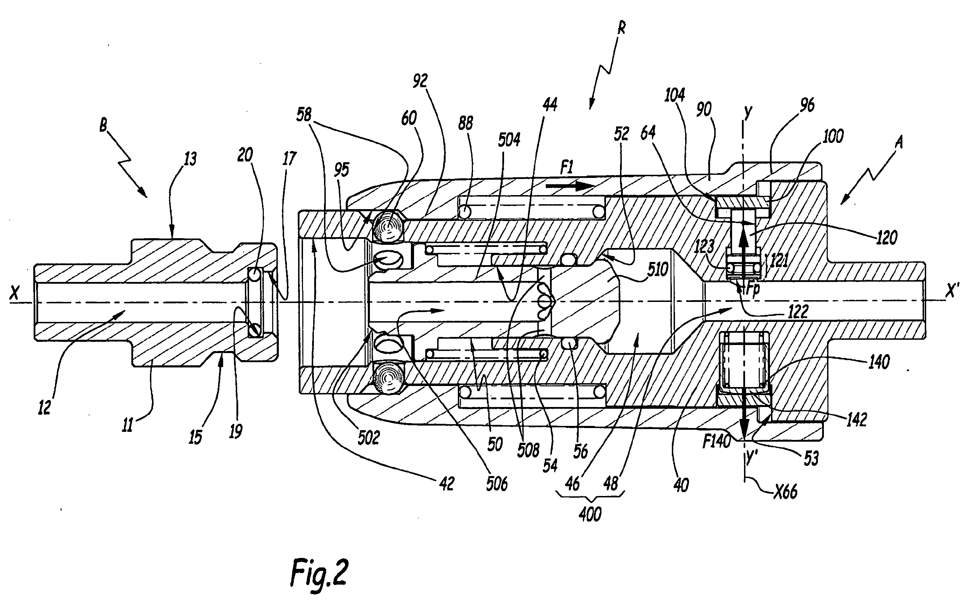

Le raccord rapide R représenté sur les figures 2 à 8 comprend un premier élément conformé en élément femelle A, représenté seul à la figure 1, et un second élément conformé en élément ou embout mâle B, prévus pour s'emmancher l'un dans l'autre dans la direction d'un axe X-X' qui est, en pratique, un axe longitudinal de l'élément A, commun aux éléments A et B en cours d'accouplement ou accouplés.

Par convention, on considère que la partie avant d'un élément A ou B est la partie de cet élément tournée vers l'autre élément lors de leur connexion.

La partie arrière de l'élément femelle A est raccordée fluidiquement à une canalisation non représentée qui peut être raccordée à une source de fluide sous pression non représentée, notamment une source de gaz telle que du GPL ou de l'hydrogène, par exemple à une pression de l'ordre de 800 bars. Une vanne de commande non représentée, connectée entre l'élément femelle A et la source de fluide à laquelle l'élément femelle A est raccordé, est adaptée pour commander la circulation de fluide vers l'élément femelle A. La partie arrière de l'élément mâle B est raccordée à une deuxième canalisation non représentée qui peut être raccordée à un organe d'utilisation ou de stockage du fluide provenant de la source précitée. Une vanne non représentée est adaptée pour ouvrir et fermer le passage entre l'élément mâle B et l'organe d'utilisation ou de stockage. A titre d'exemple, la canalisation raccordée à la partie arrière de l'élément mâle B peut être raccordée à un réservoir embarqué sur un véhicule automobile.

L'élément mâle B comprend un corps tubulaire 11 qui définit un canal 12 de circulation de fluide sous pression. Sur sa surface périphérique externe 13, le corps 11 est pourvu d'une gorge périphérique 15 de révolution à fond plat et à bords tronconiques.

Le corps tubulaire 11 est également pourvu, sur une surface radiale interne 17, et au voisinage d'une face avant 18, d'une gorge périphérique 19 de révolution, dans laquelle est reçu un joint torique 20 en élastomère.

L'élément femelle A comprend un corps tubulaire principal 40, définissant un canal d'insertion 42 du côté avant de l'élément femelle A, et dans lequel l'élément mâle B est adapté pour être inséré. Le canal d'insertion 42 se prolonge par un alésage 44 vers l'arrière de l'élément femelle A, puis par une chambre intermédiaire 46, et enfin par un canal arrière 48 situé à l'arrière de l'élément femelle A.

L'élément femelle A comporte une soupape 50 dont une partie avant comprend un bord avant tronconique 502 adapté pour entrer en contact avec le joint torique 20 lors de l'insertion de l'élément mâle B dans l'élément femelle A. La soupape 50 comporte également un manchon central 504 qui est monté dans l'alésage 44 de manière à coulisser selon l'axe X-X'. La soupape 50 comporte un canal 506 qui s'ouvre vers l'avant au voisinage du bord tronconique 502 et vers l'arrière par des trous 508 dirigés perpendiculairement à l'axe X-X'. La soupape 50 comporte également une butée circulaire arrière 510 adaptée pour venir en contact contre un siège 52 du corps 40, situé dans la chambre intermédiaire 46.

La chambre 46 et le canal arrière 48 forment ensemble un conduit 400 de circulation de fluide dans le corps 40.

Dans la configuration désaccouplée du raccord R, représentée à la figure 1, et dans laquelle l'élément mâle B n'est pas inséré dans l'élément femelle A, la soupape 50 est repoussée par un ressort 54 dans une position fermée, dans laquelle la butée 510 est en appui contre le siège 52. Dans cette position, les trous 508 de la soupape 50 débouchent dans l'alésage 44. Un joint torique 56 placé dans l'alésage 44 et coopérant avec la soupape 50 en arrière des trous 508 empêche l'écoulement de fluide depuis la chambre intermédiaire 46 vers l'extérieur de l'élément femelle A.

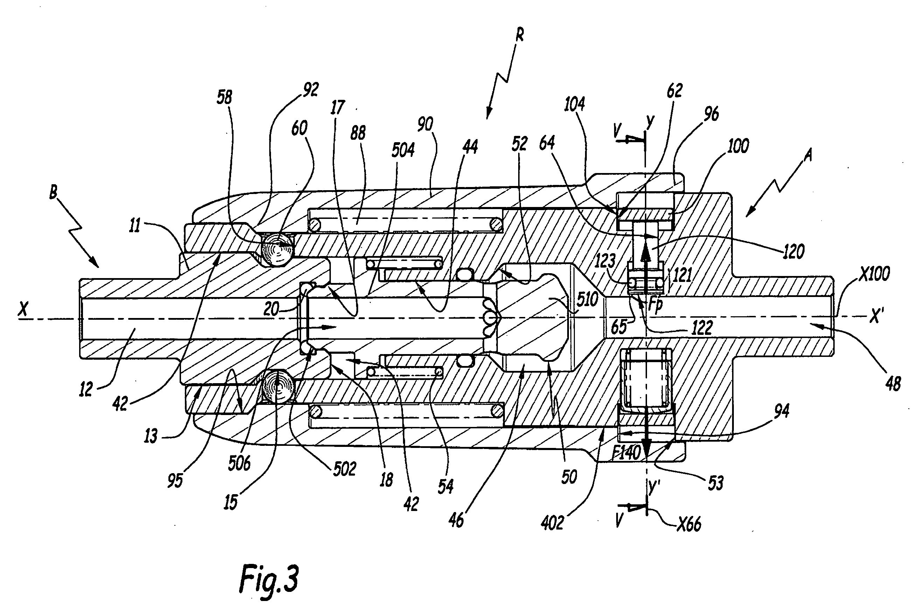

La partie avant du corps 40 comporte des logements 58 formés par des trous cylindriques à section circulaire orientés perpendiculairement à l'axe X-X'. Des billes 60 de verrouillage sont montées dans les logements 58. Dans la configuration accouplée du raccord représentée à la figure 3, les billes 60 font saillie dans le canal d'insertion 42 de manière à s'engager dans la gorge 15 de l'élément mâle B et à verrouiller celui-ci en configuration accouplée dans l'élément femelle A. Dans cette configuration, les billes de verrouillage 60 sont maintenues dans le canal d'insertion 42 sous l'action d'une partie protubérante 92 d'une bague de verrouillage 90 de forme cylindrique à section circulaire montée du côté extérieur du corps 40 avec possibilité de coulissement selon l'axe X-X'. La partie protubérante 92 fait saillie radialement en direction de l'axe X-X' de manière à repousser les billes 60 en direction de l'axe X-X'. Dans la configuration de la figure 3, la bague de verrouillage 90 est en position avant de verrouillage ou première position, et les billes 60 font saillie dans le canal d'insertion 42 et maintiennent l'élément mâle B emmanché dans l'élément femelle A. Dans sa position avant, la bague de verrouillage 90 bloque chacune des billes de verrouillage 60 dans une position de verrouillage de l'élément mâle B dans l'élément femelle A en position accouplée.

Pour désaccoupler l'élément mâle B de l'élément femelle A, la bague de verrouillage 90 doit être tirée vers l'arrière par un opérateur. Dans sa position arrière ou seconde position, qui correspond à sa position dite de libération, la bague de verrouillage 90 ne s'oppose pas à un déplacement radial externe de chacune des billes de verrouillage 60 jusqu'à une position de déverrouillage dans laquelle les billes 60 ne font plus saillie dans le canal d'insertion 42 et les éléments mâle B et femelle A peuvent être désaccouplés. La manoeuvre de désaccouplement doit être effectuée lorsque la pression du fluide circulant dans le canal de circulation de fluide est inférieure à une pression de sécurité prédéfinie, par exemple égale à 10 bars. Ceci permet de s'assurer que le désaccouplement du raccord ne produira pas d'effet de coup de fouet lorsque l'opérateur déconnectera l'élément mâle B de l'élément femelle A.

Pour empêcher la manoeuvre de la bague de verrouillage 90, l'élément femelle A comporte un organe de blocage de la bague de verrouillage 90 dans sa position avant. La position de l'organe de blocage est contrôlée par la pression de fluide dans le conduit 400 de circulation de fluide, de manière que l'organe de blocage empêche la translation vers l'arrière de la bague de verrouillage 90 lorsque la pression du fluide dans le conduit 400 est supérieure à la pression de sécurité.

Dans le mode de réalisation représenté sur les figures 1 à 6, l'organe de blocage est un anneau de blocage 100 fermé monté autour du corps 40. L'anneau de blocage 100 est rigide, c'est-à-dire qu'il ne se déforme pas dans les conditions d'utilisation, notamment mécaniques et de température, du raccord R. L'anneau de blocage 100 est suffisamment rigide pour ne pas se déformer sous l'effet d'une force axiale exercée par la bague de verrouillage 90 actionnée normalement par un opérateur. L'anneau de blocage 100 est centré autour d'un axe longitudinal X100 qui est confondu avec l'axe X-X' dans la configuration des figures 1 à 3 et 5. L'anneau de blocage 100 est logé dans une rainure de guidage périphérique 62 du corps 40, qui est ménagée dans une surface externe 402 du corps 40. La rainure 62 guide l'anneau de blocage 100 dans une direction transversale Y-Y' de l'élément femelle A, perpendiculairement à l'axe X-X'. Le diamètre externe de l'anneau 100 est inférieur ou égal au diamètre de la surface externe 402 autour de laquelle coulisse la bague de verrouillage 90 entre sa position avant et sa position arrière.

La position de l'anneau de blocage 100 est contrôlée en fonction de la pression du fluide dans le conduit 400 au moyen d'un piston 120 monté mobile de manière étanche dans un alésage 64 du corps 40, qui forme le logement du piston 120. Le logement 64 est centré autour de la direction Y-Y' perpendiculaire à l'axe X-X' et traverse le corps 40 depuis le canal arrière 48 vers l'extérieur du corps 40 de l'élément femelle A. Le logement 64 débouche dans la rainure 62. Le piston 120 comprend un collet terminal 121 de diamètre équivalent au diamètre de l'alésage 64. Le collet 121 forme une surface active 122 située du côté du canal arrière 48, et sur laquelle la pression du fluide présent dans le canal arrière 48 s'exerce, sous la forme d'une force Fp. Autrement dit, la surface active 122 est en permanence en contact fluidique avec le canal arrière 48. Un joint 123 disposé dans une gorge du collet 121 et coopérant avec l'alésage 64 assure l'étanchéité entre le canal arrière 48 et l'extérieur de l'élément de raccord A au niveau de l'alésage 64. Le piston 120 s'étend en direction de la surface externe 402 à partir de la surface active 122 à l'opposé du conduit 400.

Le piston 120 est également lié mécaniquement à l'anneau de blocage 100, auquel il transmet la force Fp. A cet effet, le piston 120 comprend une surface externe curviligne 124 qui transmet la force Fp à l'anneau de blocage 100, en coopérant avec une surface cylindrique interne 102 de l'anneau de blocage 100. Par surface curviligne, on définit une surface pouvant être en tronçon de cylindre ou de sphère et ayant une génératrice en arc de cercle définissable par son rayon de courbure. Le rayon de courbure de la surface curviligne 124 est sensiblement égal au rayon de courbure de la surface 102. L'élément femelle A comprend au moins un élément de rappel adapté pour repousser l'anneau de blocage 100 et le piston 120 vers une position de déblocage, représentée aux figures 1 à 3 et 5, dans laquelle l'anneau de blocage 100 ne dépasse pas radialement de la surface externe 402 et ne bloque donc pas le mouvement vers l'arrière de la bague de verrouillage 90. L'élément de rappel est un ressort spiral 140 en appui dans un logement 66 du corps 40. L'axe longitudinal du ressort spiral de compression 140 et l'axe longitudinal X66 de l'alésage formant le logement 66 sont parallèles entre eux, de préférence coaxiaux et confondus avec la direction Y-Y'. Le logement 66 est situé hors du logement 64 du piston 120, autrement dit le logement 66 ne débouche pas sur le logement 64 et ne communique pas fluidiquement avec le logement 64. Plus précisément le logement 66 est ménagé dans le corps 40 à l'opposé, selon l'axe X-X', du logement 64 par rapport au canal arrière 48. Cette construction rend disponible un logement de plus grande longueur pour le ressort 140, ce qui permet, pour une course du piston 120 équivalente à celle d'un raccord de l'état de l'art, d'obtenir un rapport entre la course du piston 120 et la longueur du logement 66 du ressort spiral 140 inférieur à celui du raccord de l'état de l'art. Ceci permet une meilleure maîtrise des efforts de rappel de l'anneau de blocage 100, sans pénaliser l'encombrement radial du raccord, par rapport aux matériels connus. Le logement 66 débouche sur l'extérieur du corps 40 mais ne débouche pas dans le canal arrière 48.

L'élément femelle A comporte un poussoir 142, dans lequel le ressort spiral 140 est logé et qui est monté mobile dans le logement 66. Le poussoir 142 transmet, entre le ressort 140 et l'anneau de blocage 100, un effort de rappel F140 exercé par le ressort 140. Le poussoir 142 est en contact avec la surface cylindrique interne 102 de l'anneau de blocage 100 pour transmettre l'effort F140. Une surface externe curviligne 144 du poussoir 142 est en contact avec la surface interne cylindrique 102 de l'anneau de blocage 100. Le rayon de courbure de la surface curviligne 144 est sensiblement égal au rayon de courbure de la surface cylindrique interne 102.

Etant en contact simultanément avec la surface externe curviligne 124 du piston et avec la surface externe curviligne 144 du poussoir 142, l'anneau de blocage 100 est donc solidaire dans son mouvement transversal selon la direction Y-Y' du mouvement du piston 120.

L'anneau de blocage 100 forme un moyen de transmission, entre le ressort 140 et le piston 120, de l'effort de rappel F140. L'anneau de blocage 100 permet de repousser, élastiquement, le piston 120 à l'encontre de la force de pression Fp. L'anneau de blocage 100 étant monté autour du corps 40, il évite l'emploi d'un moyen de transmission d'effort entre le piston 120 et le ressort 140 qui passe à travers le canal arrière 48. L'anneau de blocage 100 permet donc d'éviter des perturbations dans l'écoulement du fluide, et réduit le nombre de joints d'étanchéité nécessaire pour isoler le ressort 140 du conduit de circulation 400.

L'anneau de blocage 100 est à section de tore rectangulaire et comporte une surface latérale 104 axiale avant adaptée pour recevoir en appui une surface axiale arrière 94 de la bague de verrouillage 90. L'emploi d'un organe de blocage de type anneau permet de limiter l'encombrement radial de l'élément femelle A.

La bague de verrouillage 90 est repoussée par un ressort 88 en direction de sa position avant, en butée contre un épaulement avant externe 41 du corps 40.

Le fonctionnement du raccord rapide R est le suivant : Dans la configuration désaccouplée du raccord R représentée à la figure 1, l'anneau de blocage 100 est dans une position de déblocage, dans laquelle la surface latérale 104 ne bloque pas le déplacement vers l'arrière de la bague de verrouillage 90. En effet, dans ce cas, la pression du fluide dans le conduit 400 obturé par la soupape 50 est inférieure à la pression de sécurité. Le piston 120 est donc repoussé dans son logement 64 par l'effort F140 exercé sur l'anneau de blocage 100 de manière que la surface latérale 104 ne soit pas en regard, selon une direction parallèle à l'axe X-X', de la surface axiale 94. Dans cette position interne, la surface active 122 du piston 120 est en butée contre un épaulement 65 du logement 64, qui limite la course du piston 120 vers le canal arrière 48.

Lorsque l'élément mâle B est engagé dans l'élément femelle A, la bague de verrouillage 90 est déplacée vers l'arrière selon la flèche F1 par l'opérateur de manière que les billes de verrouillage 60 sont radialement repoussées par le corps tubulaire 11 de l'élément mâle B en position de déverrouillage vers une partie avant 95 de la bague de verrouillage 90, dont le diamètre interne est supérieur à celui de la partie protubérante 92. Cette configuration de la bague de verrouillage 90 est représentée à la figure 2. Lors de l'avancée de l'élément mâle B dans l'élément femelle A, après prise d'étanchéité au niveau du joint 20, la soupape 50 est repoussée vers l'arrière à l'encontre de l'action du ressort 54. Lorsque l'élément mâle B est suffisamment inséré dans l'élément femelle A, les billes de verrouillage 60 se trouvent radialement au niveau de la gorge périphérique 15 et s'y engagent, sous l'action de la bague de verrouillage 90 qui est repoussée vers sa position avant par le ressort 88, au moment où l'opérateur relâche son action sur la bague de verrouillage 90. Lorsque la bague de verrouillage 90 arrive dans sa position avant, les billes 60 sont repoussées en direction de l'axe X-X' par la partie protubérante 92 et maintenues dans la gorge 15 en position de verrouillage, ce qui verrouille l'élément mâle B dans le corps 40 de l'élément femelle A selon l'axe longitudinal X-X' en empêchant son retrait hors de l'élément femelle A.

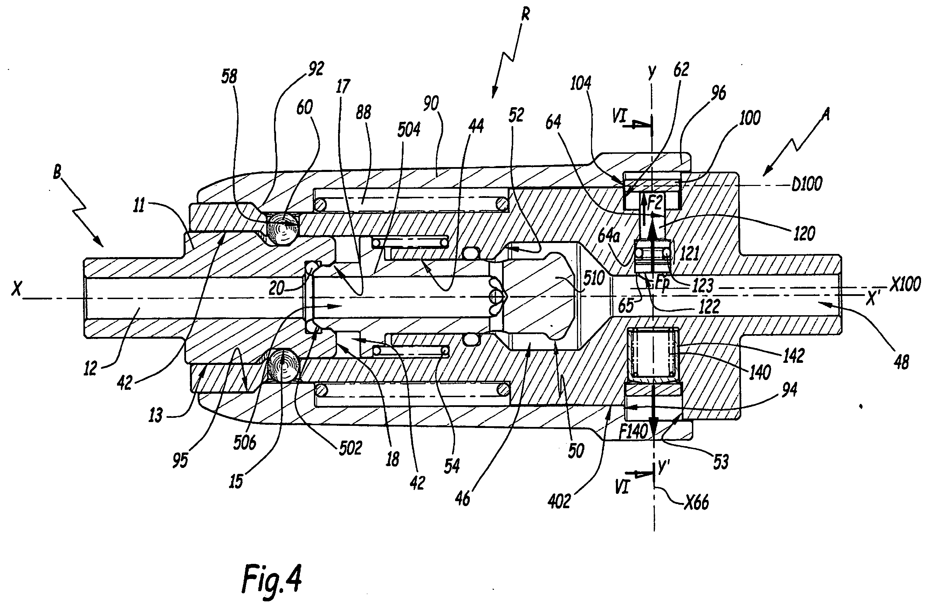

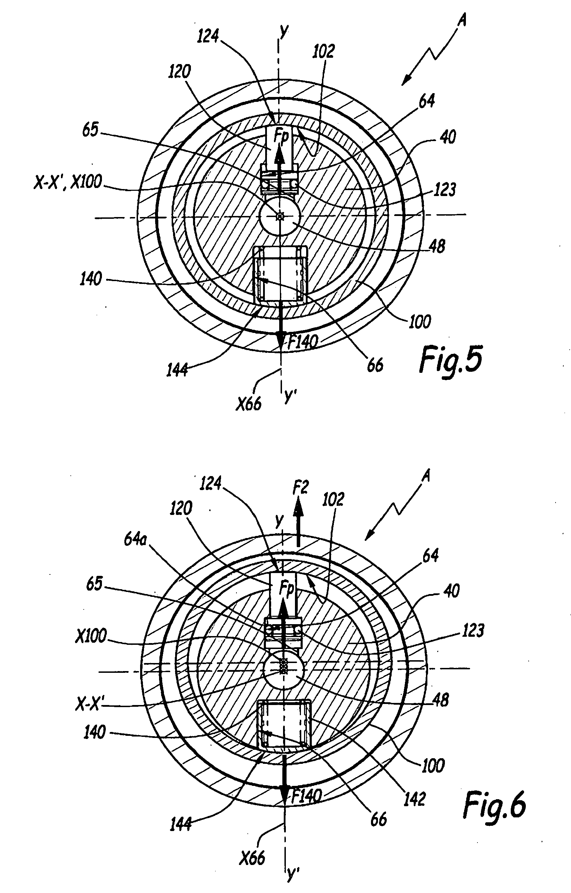

Une fois le raccord accouplé, l'alimentation en fluide de l'élément femelle A est activée au moyen de la vanne de commande. Le fluide sous pression, de l'ordre de 800 bars, provenant de la canalisation connectée à l'élément femelle A parvient dans le conduit de circulation de fluide 400 et s'écoule à travers les trous 508 qui communiquent avec le canal arrière 48, à travers le canal 506 et à travers le canal 12. La pression dans le canal arrière 48 augmente au-delà de la pression de sécurité et s'exerce sur la surface active 122. La surface active 122 est donc repoussée dans la direction Y-Y' vers l'extérieur dans le logement 64 et le piston 120 est alors déplacé de sa position interne des figures 1 à 3 et 5 selon la flèche F2 vers sa position externe des figures 4 et 6, dans laquelle il n'est plus en contact avec l'épaulement 65, à l'encontre de l'effort F140 exercé sur l'anneau de blocage 100. Comme la surface cylindrique externe 124 est maintenue en contact avec la surface interne 102, par le ressort 140 et le poussoir 142, l'anneau de blocage 100 est également déplacé dans la direction Y-Y' selon la flèche F2, jusqu'à une position de blocage où l'anneau 100 dépasse radialement de la surface radiale externe 402 et dans laquelle la surface latérale 104 fait partiellement face, selon une direction D100 parallèle à l'axe X-X', à la surface axiale arrière 94. Dans cette position externe, le piston 120 est maintenu par l'effort Fp en butée contre un épaulement 64a du logement 64.

Dans la configuration des figures 4 et 6, la bague de verrouillage 90 ne peut pas être déplacée vers l'arrière pour libérer les billes de verrouillage 60 et déconnecter l'élément mâle B de l'élément femelle A, car la surface latérale 104 de l'anneau de blocage 100 forme obstacle au déplacement de la bague de verrouillage 90 selon l'axe X-X' jusqu'à sa position de libération en coopérant avec la surface axiale arrière 94. L'appui entre la surface latérale 104 et la surface axiale arrière 94 se fait sur une surface de contact en forme de croissant, qui évite le risque de marquage des pièces, comme cela est le cas pour les raccords dans lesquels la bague de verrouillage est bloquée en translation par le piston selon une ligne de contact.

Lorsque le transfert de fluide dans le raccord R est terminé, par exemple si un réservoir d'hydrogène d'un véhicule est complètement rempli, l'alimentation en fluide est stoppée en manoeuvrant la vanne de commande et le passage entre l'élément mâle B et le réservoir est fermé. Le fluide contenu dans le conduit 400 et dans le conduit 12 est purgé. Le débit et la pression du fluide dans le canal arrière 48 diminuent et la force Fp exercée par la pression du fluide diminue. Lorsque la pression dans le canal arrière 48 est de nouveau inférieure à la pression de sécurité, le piston 120 est ramené dans sa position interne, en butée contre l'épaulement 65, sous l'action de l'effort de rappel F140 via l'anneau de blocage 100. L'anneau de blocage 100 revient à sa position de déblocage, et un opérateur manipulant le raccord peut à nouveau déplacer la bague de verrouillage 90 vers sa position arrière afin de désaccoupler le raccord R sans danger. Avec la bague de verrouillage 90 en position arrière, les billes de verrouillage 60 sont repoussées en position de déverrouillage par la surface externe de l'élément mâle B retiré hors du corps 40 de l'élément femelle A.

Le piston 120 est donc soumis en permanence au différentiel de pression de part et d'autre du joint 123, c'est-à-dire à la pression du fluide dans le canal 48 et à la pression atmosphérique de l'air à l'extérieur du raccord et à l'effort F140 de rappel élastique. L'effort de rappel F140 est dimensionné en fonction de la valeur de la pression de sécurité, de manière que, pour une pression dans le canal arrière 48 inférieure à la pression de sécurité, le piston 120 est automatiquement rappelé et maintenu dans sa position interne, sous l'effort élastique F140, et qu'une pression dans le canal interne 48 qui est supérieure à la pression de sécurité place le piston 120 en position externe, à l'encontre de l'effort élastique F140. La force Fp exercée par le fluide dans le canal 48 sur la surface active 122 devient alors supérieure à la force F140, aux efforts de pression de l'air extérieur sur le piston 120 et aux efforts d'adhérence puis de frottement du piston 120 dans son logement 64.

Dans le cas où, en configuration désaccouplée, la pression du fluide existant dans le canal arrière 48 obturé par la soupape 50 est supérieure à la pression de sécurité, la connexion du raccord R doit être empêchée pour des raisons de sécurité. Le piston 120, déplacé en position externe sous l'action de la force Fp, repousse et maintient l'anneau de blocage 100 dans sa position de blocage. La translation vers l'arrière de la bague de verrouillage 90 est donc impossible. Les billes de verrouillage 60 ne peuvent donc pas être repoussées à l'opposé de l'axe X-X' lors de l'insertion de l'élément mâle B dans l'élément femelle A. Le raccord R ne peut donc pas être connecté.

La bague de verrouillage 90 comporte une paroi tubulaire arrière 96 s'étendant vers l'arrière de l'élément femelle A au-delà de la surface axiale 94. La paroi tubulaire arrière 96 recouvre la rainure 62 et un épaulement externe arrière 53 du corps 40 dans chacune des configurations de l'élément femelle A au cours du fonctionnement du raccord R. La paroi tubulaire arrière 96 procure donc une protection de l'anneau de blocage 100 et du piston 120 vis-à-vis de pollutions externes qui pourraient notamment perturber le coulissement du piston 120. La bague de verrouillage 90 forme une bague de commande, car son déplacement commande la libération des billes de verrouillage 60 pour l'accouplement et le désaccouplement du raccord.

Selon un mode de réalisation non représenté de l'invention, l'élément de femelle de raccord A peut ne pas comprendre de poussoir 142. Dans ce cas, le ressort 140 agit directement sur l'anneau de blocage 100, qui peut comprendre à cet effet un méplat perpendiculaire à l'axe longitudinal du ressort 140.

Dans les modes de réalisation qui suivent, les éléments communs au premier mode de réalisation portent les mêmes références et fonctionnent de la même manière. Seules les différences par rapport au premier mode de réalisation sont décrites ci-après.

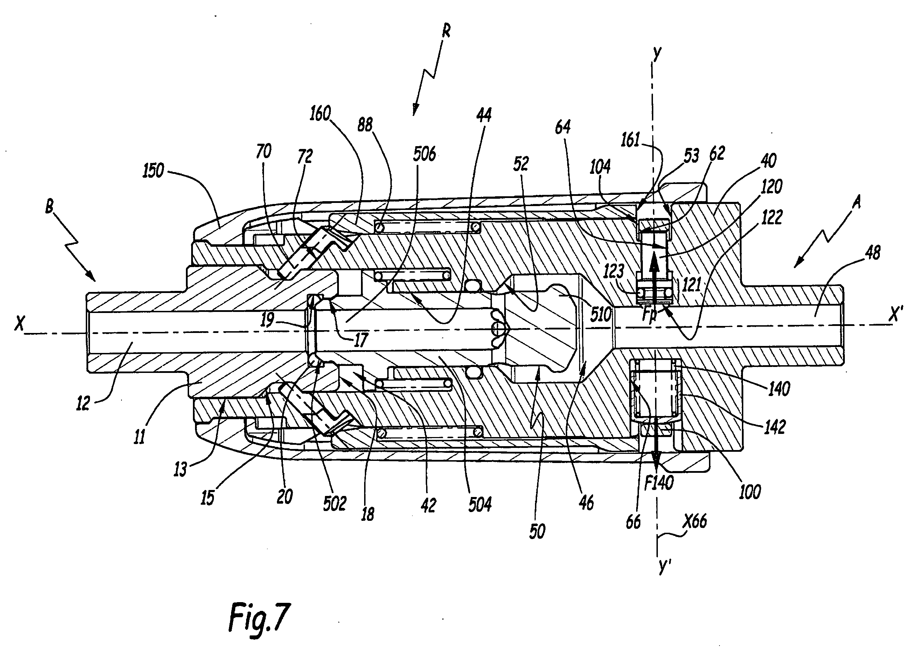

Un deuxième mode de réalisation de l'invention est représenté sur la figure 7. Ce mode de réalisation diffère du mode de réalisation des figures 1 à 6 par le fait que les organes de verrouillage de l'élément mâle B dans l'élément femelle A ne sont pas des billes 60 mais des doigts 70 logés dans des logements cylindriques 72 du corps 40 inclinés par rapport à l'axe X-X' et inclinés par rapport à une direction radiale à l'axe X-X'. Une extrémité des doigts 70 située du côté de l'axe X-X' est adaptée pour s'engager dans la gorge 15 d'un élément mâle B en configuration accouplée du raccord R. L'élément femelle A comprend une bague externe 150 qui entoure une bague interne 160 dans laquelle sont partiellement logés les doigts 70 et qui recouvre également la rainure 62 et l'épaulement arrière externe 53 pour protéger l'anneau de blocage 100 et le piston 120 contre les pollutions extérieures dans toutes les positions de la bague externe 150 au cours du fonctionnement. Le fonctionnement des doigts 70 et les éléments qui interagissent entre la bague interne 160 et les doigts 70 sont décrits dans le brevet EP-B-1 862 720. En particulier, pour désaccoupler le raccord, la bague externe 150 est déplacée vers l'arrière d'une première position, illustrée en figure 7, dans laquelle les doigts 70 sont maintenus entre l'élément mâle B et les logements cylindriques 72 en position de verrouillage avec la bague interne 160 en position avant, jusqu'à une seconde position non représentée, dans laquelle la bague externe 150 a entraîné la bague interne 160 en position arrière, et donc les doigts 70 en position de déverrouillage. De la même façon que dans le premier mode de réalisation, la bague interne 160 est bloquée en translation vers l'arrière dans sa position avant par l'anneau de blocage 100 qui s'oppose à une surface axiale arrière 161 de la bague interne 160, ce qui empêche la connexion et la déconnexion lorsque la pression du fluide dans le canal arrière 48 est supérieure à la pression de sécurité. La bague interne 160 joue le rôle de bague de commande dans la mesure où le déplacement de la bague interne 160 vers l'arrière commande l'accouplement et le désaccouplement du raccord.

En variante non représentée, la bague externe 150 peut être bloquée en translation dans sa première position avant par l'anneau de blocage 100 à la place de la bague interne 160, ce qui empêche la déconnexion sous une pression supérieure à la pression de sécurité. La bague externe 150 joue le rôle de bague de commande dans la mesure où le déplacement de la bague externe 150 vers l'arrière commande le désaccouplement du raccord.

L'invention a donc pour but de bloquer le déplacement d'une bague de commande de l'élément de raccord lorsque ce déplacement autorise le désaccouplement du raccord même si cette bague de commande ne coopère pas directement avec les organes de verrouillage en position de verrouillage et/ou en position de déverrouillage. En variante non représentée, l'organe de blocage forme obstacle au déplacement de la bague de commande, sur sa course de désaccouplement, entre sa première position et sa seconde position , de manière que les organes de verrouillage ne puissent atteindre leur position de déverrouillage Dans ce cas, une certaine course vers sa seconde position est autorisée à la bague de commande, cette course étant insuffisante pour libérer les organes de verrouillage et permettre le désaccouplement du raccord.

Selon des modes de réalisation non représentés, les organes de verrouillage de l'élément mâle B dans l'élément femelle A peuvent également être des griffes de verrouillage, ou des doigts sphériques selon EP-B-2 278 205.

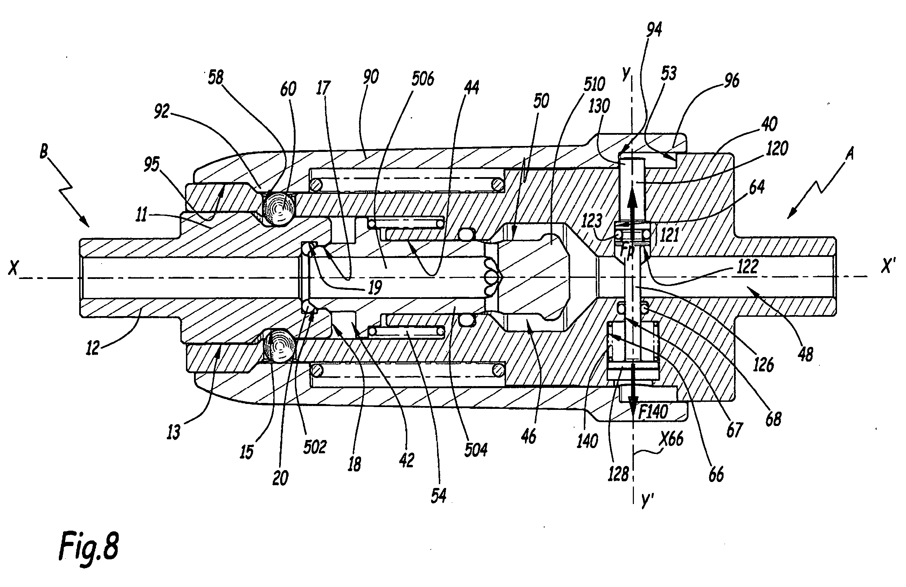

Un troisième mode de réalisation de l'invention est représenté sur la figure 8. Ce mode de réalisation diffère du mode de réalisation des figures 1 à 6 par le fait que l'élément femelle A ne comporte dans ce cas pas d'anneau de blocage 100. La surface active 122 du piston 120, sur laquelle s'exerce l'action du fluide sous pression dans le canal arrière 48, est de forme annulaire et mobile dans le logement 64. Une tige de transmission 126 traverse le canal arrière 48 selon la direction Y-Y' et se termine dans le logement 66 par une rondelle d'extrémité 128. La tige 126 s'étend jusqu'au centre de la surface active 122. La rondelle d'extrémité 128 a un diamètre équivalent au diamètre du logement 66. Le ressort 140, en appui dans le logement 66, s'appuie sur la rondelle d'extrémité 128 pour exercer l'effort de rappel F140. Le logement 66 est ici relié au canal arrière 48 par une embouchure cylindrique 67, et l'étanchéité du logement 66 par rapport au canal arrière 48 est réalisée par un joint torique 68 disposé entre l'embouchure 67 et la tige 126.

Dans ce mode de réalisation, l'organe de blocage est formé par le piston 120, dont une extrémité externe 130 qui dépasse radialement à l'extérieur du corps 40, lorsque le piston 120 est déplacé et maintenu en position externe par la pression de fluide dans le conduit de circulation de l'élément femelle A, s'oppose à la translation vers l'arrière de la bague de verrouillage 90. Dans ce cas, le contact entre le piston 120 et la bague 90 se fait selon une ligne de contact. En variante, le piston 120 peut présenter une surface latérale pour un contact surfacique avec la bague 90.

La tige 126 et la rondelle d'extrémité 128, monoblocs avec le piston 120, forment des moyens de transmission de l'effort de rappel F140 au piston 120.

Comme la pièce comprenant le piston 120, la tige de transmission 126 et la rondelle de transmission 128 a une longueur supérieure à celle du piston 120 seul suivant la direction Y-Y', l'effort de flexion engendré par d'éventuels efforts de la bague de verrouillage 90 vers l'arrière sur le piston 120 en position externe est réduit. Le guidage linéaire du piston 120 est amélioré, ce qui permet de réduire les risques de fuite entre le piston 120 et le corps 40 au niveau du joint 123.

Selon un mode de réalisation non représenté, le piston traversant le canal arrière 48 décrit à la figure 8 peut être associé à un anneau de blocage similaire à l'anneau de blocage 100, monté à l'extérieur du corps 40 et adapté pour assurer le blocage de la bague de verrouillage 90. Dans ce cas, l'anneau de blocage n'assure pas la transmission de l'effort de rappel F140 entre le ressort 140 et le piston 120, puisque le ressort 140 s'appuie sur la rondelle 128 mais est apte à assurer un blocage de type surfacique de la bague de verrouillage pour empêcher sa manoeuvre de désaccouplement. Le mouvement de l'anneau de blocage 100 est solidaire du mouvement du piston 120 dans la direction Y-Y' aux jeux radiaux près.

Selon un autre mode de réalisation non représenté de l'invention, l'élément femelle A peut comprendre plusieurs ressorts de rappel disposés chacun dans un logement du corps isolé de manière étanche du conduit de circulation 400. Les logements de ces ressorts sont de préférence parallèles au logement du piston 120 de manière à garantir des efforts de rappel parallèles à la force de pression Fp exercée sur le piston 120. Dans ce cas, les moyens de transmission de l'effort de rappel entre les ressorts et le piston 120 peuvent comprendre une pièce en forme de U, disposée autour du corps 40 et suffisamment rigide pour transmettre l'effort de rappel F140 au piston 120 et l'organe de blocage peut être constitué par une extrémité externe du piston 120. L'élément femelle A peut notamment comprendre deux ressorts exerçant chacun un effort sur l'une des branches du U, tandis que l'effort de rappel est transmis au piston en contact avec la partie centrale arrondie du U.

En variante non représentée, plusieurs pistons comme le piston 120 peuvent agir sur un unique organe de blocage de type anneau.

Dans tous les modes de réalisation, le ressort de rappel 140 du piston 120 en position interne est disposé intégralement dans un logement 66 qui est isolé fluidiquement du conduit 400 de circulation de fluide, ce qui garantit que le comportement du ressort 140 n'est pas perturbé par l'écoulement et par la pression du fluide dans l'élément de raccord, et donc fiabilise la détection d'une pression de sécurité.

Selon un mode de réalisation non représenté de l'invention, le mouvement de la bague de commande qui entraîne le déverrouillage du raccord peut s'effectuer de l'arrière vers l'avant, au lieu de s'effectuer de l'avant vers l'arrière. Dans ce cas, la première position de la bague de commande est une position arrière, alors que la seconde position est une position avant.

Les caractéristiques des modes de réalisation et variantes décrits ci-dessus peuvent être combinées dans le cadre de la présente invention.

## Revendications

1. Elément (A) femelle de raccord rapide, pour la jonction de deux canalisations de fluide sous pression, cet élément femelle (A) de raccord étant apte à coopérer, selon un axe longitudinal (X-X') de l'élément femelle (A), avec un élément mâle (B) complémentaire de raccord, l'élément femelle (A) de raccord comprenant :
- un corps (40) traversé par un conduit (400) de circulation de fluide,
- au moins un organe de verrouillage (60 ; 70) mobile entre une position de verrouillage de l'élément mâle (B) par rapport au corps (40) de l'élément femelle (A) de raccord dans une configuration accouplée du raccord, et une position de déverrouillage, dans laquelle les éléments femelle et mâle (A, B) de raccord peuvent être désaccouplés,
- une bague de commande (90 ; 150 ; 160) mobile en translation selon l'axe longitudinal (X-X') entre une première position dans laquelle chaque organe de verrouillage (60 ; 70) est maintenu dans sa position de verrouillage, et une seconde position, dans laquelle chaque organe de verrouillage (60 ; 70) est apte à se déplacer dans sa position de déverrouillage,
- un piston (120) comprenant une surface active (122) en contact fluidique avec ledit conduit (400) et étant mobile de manière étanche dans un logement (64) traversant le corps (40) selon une direction transversale (Y-Y') depuis le conduit (400) de circulation de fluide vers l'extérieur du corps (40), le piston (120) s'étendant à partir de la surface active (122) à l'opposé du conduit (400) de circulation de fluide,
- un organe (100; 130) de blocage dont le mouvement parallèlement à la direction transversale (Y-Y') est solidaire du mouvement du piston (120),
- le piston (120) étant mobile depuis une position interne, dans laquelle l'organe de blocage (100 ; 300) ne bloque pas le mouvement de la bague de commande (90 ; 150 ; 160), vers une position externe dans laquelle l'organe de blocage (100 ; 130) empêche la translation de la bague de commande (90 ; 150 ; 160) jusqu'à sa seconde position,
- au moins un élément de rappel élastique (140) du piston (120) vers sa position interne,
**caractérisé en ce que**
- l'élément de rappel élastique (140) est monté dans un logement (66) du corps (40) de l'élément femelle (A) de raccord situé hors du logement (64) du piston (120), le logement (66) de l'élément de rappel élastique (140) étant isolé fluidiquement du conduit (400) de circulation de fluide, et
- l'élément femelle (A) de raccord comprend des moyens (100 ; 126) de transmission, disposés entre l'élément de rappel (140) et le piston (120), pour rappeler le piston (120) vers sa position interne.

2. - Elément femelle de raccord rapide selon la revendication 1, **caractérisé en ce que** le logement (66) de l'élément de rappel élastique (140) est ménagé dans le corps (40) à l'opposé du logement (64) du piston (120) par rapport à l'axe longitudinal (X-X').

3. - Elément femelle de raccord rapide selon l'une des revendications précédentes, **caractérisé en ce que** l'organe de blocage (100) comprend une surface latérale (104) adaptée pour recevoir en appui surfacique, selon l'axe longitudinal (X-X') de l'élément femelle (A) de raccord, une surface axiale (94 ; 161) de la bague de commande (90 ; 150 ; 160).

4. - Elément femelle de raccord rapide selon l'une des revendications précédentes, **caractérisé en ce que** lesdits moyens de transmission (100) sont montés à l'extérieur du corps (40) de l'élément femelle (A) de raccord.

5. - Elément femelle de raccord rapide selon l'une des revendications 1 à 3, **caractérisé en ce que** l'organe de blocage est un anneau rigide (100) entourant le corps (40) et le piston (120).

6. - Elément femelle de raccord rapide selon la revendication 5, **caractérisé en ce qu'**il comprend une rainure (62), ménagée dans une surface externe (402) du corps (40), dans laquelle débouche le logement (64) du piston (120), et adaptée pour guider l'anneau de blocage (100) selon la direction transversale (Y-Y') de l'élément femelle (A) de raccord.

7. - Elément femelle de raccord rapide selon l'une des revendications 5 à 6, **caractérisé en ce que** lesdits moyens de transmission sont formés par l'anneau de blocage (100).

8. - Elément femelle de raccord rapide selon la revendication 7, **caractérisée en ce qu'**il comprend un poussoir (142) disposé entre l'élément de rappel élastique (140) et l'anneau de blocage (100).

9. - Elément femelle de raccord rapide selon la revendication 8, **caractérisé en ce que** le poussoir (142) et/ou le piston (120) comprennent une surface externe (144, 124) curviligne adaptée pour coopérer avec une surface cylindrique interne (102) de l'anneau de blocage (100), et **en ce que** le rayon de courbure de la surface externe curviligne (144,124) du poussoir (142) et/ou du piston (120), est sensiblement égal au rayon de courbure de la surface cylindrique interne (102) de l'anneau de blocage (100).

10. - Elément femelle de raccord rapide selon l'une des revendications 1 à 3 ou 5 ou 6, **caractérisé en ce que** lesdits moyens de transmission comprennent une tige (126) s'étendant dans le logement (66) de l'élément de rappel élastique (140) jusqu'au piston (120) à travers le conduit (400) de circulation de fluide.

11. - Elément femelle de raccord rapide selon l'une des revendications 1 à 4, **caractérisé en ce que** l'organe de blocage est une extrémité externe (130) du piston (120) adaptée pour coopérer, selon l'axe longitudinal (X-X') de l'élément femelle (A) de raccord, avec une surface axiale (94 ; 161) de la bague de commande (90 ; 150 ; 160).

12. - Elément femelle de raccord rapide selon l'une des revendications précédentes, **caractérisé en ce que** l'organe de blocage (100) est adapté pour coopérer avec une surface axiale (94) de la bague de commande (90 ; 150 ; 160) lorsque ladite bague (90 ; 150 ; 160) est dans sa première position.

13. Elément femelle de raccord rapide selon l'une des revendications précédentes, **caractérisé en ce que** le corps (40) forme un épaulement externe (53) en arrière du logement (64) du piston (120) et **en ce qu'**une bague (90 ; 150 ; 160) externe au corps (40) recouvre radialement l'organe de blocage (100) et l'épaulement externe (53) en configurations accouplée et désaccouplée du raccord (R) ainsi que pendant la manoeuvre d'accouplement et de désaccouplement du raccord (R).

14. - Elément femelle de raccord rapide selon l'une des revendications précédentes, **caractérisé en ce qu'**il comprend une soupape (50) d'obturation du conduit (400).

15. - Raccord rapide (R) pour la jonction de deux canalisations de fluide sous pression comprenant un élément femelle (A) de raccord selon l'une des revendications précédentes et un élément mâle (B) de raccord complémentaire.

## Patentansprüche

1. Schnellkupplungsaufnahmeteil (A) zur Verbindung zweier Druckmittelleitungen, wobei das Kupplungsaufnahmeteil (A) entlang einer Längsachse (X-X') des Aufnahmeteils (A) mit einem komplementären Kupplungseinsteckteil (B) zusammenwirken kann, wobei das Aufnahmeteil (A) Folgendes umfasst:
- einen Körper (40), der von einem Fluidzirkulationskanal (400) durchgriffen ist,
- mindestens ein Verriegelungselement (60; 70), das zwischen einer Verriegelungsstellung des Einsteckteils (B) gegenüber dem Körper (40) des Kupplungsaufnahmeteils (A) in einem gekuppelten Zustand der Kupplung und einer Entriegelungsstellung beweglich ist, in der das Kupplungsaufnahmeteil (A) und das Kupplungseinsteckteil (B) entkuppelt werden können,
- einen Bedienring (90; 150; 160), der entlang der Längsachse (X-X') zwischen einer ersten Stellung, in der jedes Verriegelungselement (60; 70) in seiner Verriegelungsstellung gehalten wird, und einer zweiten Stellung, in der sich jedes Verriegelungselement (60; 70) in seine Entriegelungsstellung bewegen kann, verschiebbar ist,
- einen Kolben (120), der eine aktive Fläche (122) in Fluidkontakt mit dem Kanal (400) aufweist und in abgedichteter Weise in einer den Körper (40) durchgreifenden Aufnahme (64) entlang einer Querrichtung (Y-Y') von dem Fluidzirkulationskanal (400) zur Außenseite des Körpers (40) verschiebbar ist, wobei sich der Kolben (120) von der aktiven Fläche (122) zur gegenüberliegenden Seite des Fluidzirkulationskanals (400) erstreckt,
- ein Blockierelement (100; 130), dessen Bewegung parallel zur Querrichtung (Y-Y') fest mit der Bewegung des Kolbens (120) verbunden ist,
- wobei der Kolben (120) von einer Innenstellung, in der das Blockierelement (100; 300) die Bewegung des Bedienrings (90, 150; 160) nicht blockiert, in eine Außenstellung, in der das Blockierelement (100; 130) die Verschiebung des Bedienrings (90; 150; 160) bis in seine zweite Stellung verhindert, beweglich ist;
- mindestens ein elastisches Rückstellelement (140), das den Kolben (120) in seine Innenstellung zurückstellt,
**dadurch gekennzeichnet,**
- **dass** das elastische Rückstellelement (140) in einer Aufnahme (66) des Körpers (40) des Kupplungsaufnahmeelements (A) aufgenommen ist, welche außerhalb der Aufnahme (64) des Kolbens (120) angeordnet ist, wobei die Aufnahme (66) des elastischen Rückstellelements (140) von dem Fluidzirkulationskanal (400) fluidisch isoliert ist, und
- **dass** das Kupplungsaufnahmeteil (A) zwischen dem Rückstellelement (140) und dem Kolben (120) angeordnete Übertragungseinrichtungen (100; 126) zum Zurückstellen des Kolbens (120) in seine Innenstellung umfasst.

2. Schnellkupplungsaufnahmeteil nach Anspruch 1, **dadurch gekennzeichnet, dass** die Aufnahme (66) des elastischen Rückstellelements (140) in dem Körper (40) gegenüberliegend der Aufnahme (64) des Kolbens (120) bezüglich der Längsachse (X-X') angeordnet ist.

3. Schnellkupplungsaufnahmeteil nach einem der vorhergehenden Ansprüche, **dadurch gekennzeichnet, dass** das Blockierelement (100) eine seitliche Fläche (104) umfasst, die dazu ausgebildet ist, entlang der Längsachse (X-X') des Kupplungsaufnahmeteils (A) eine axiale Fläche (94; 161) des Bedienrings (90; 150; 160) flächig abstützend aufzunehmen.

4. Schnellkupplungsaufnahmeteil nach einem der vorhergehenden Ansprüche, **dadurch gekennzeichnet, dass** die Übertragungseinrichtungen (100) an der Außenseite des Körpers (40) des Kupplungsaufnahmeteils (A) angebracht sind.

5. Schnellkupplungsaufnahmeteil nach einem der Ansprüche 1 bis 3, **dadurch gekennzeichnet, dass** das Blockierelement ein den Körper (40) des Kolbens (120) umgebender starrer Ring (100) ist.

6. Schnellkupplungsaufnahmeteil nach Anspruch 5, **dadurch gekennzeichnet, dass** das Aufnahmeteil eine in einer Außenfläche (402) des Körpers (40) ausgebildete Nut (62) umfasst, in welche die Aufnahme (64) des Kolbens (120) mündet und die dazu ausgebildet ist, den Blockierring (100) entlang der Querrichtung (Y-Y') des Kupplungsaufnahmeteils (A) zu führen.

7. Schnellkupplungsaufnahmeteil nach einem der Ansprüche 5 bis 6, **dadurch gekennzeichnet, dass** die Übertragungseinrichtungen durch den Blockierring (100) gebildet sind.

8. Schnellkupplungsaufnahmeteil nach Anspruch 7, **dadurch gekennzeichnet, dass** das Aufnahmeteil einen Stößel (142) umfasst, der zwischen dem elastischen Rückstellelement (140) und dem Blockierring (100) angeordnet ist.

9. Schnellkupplungsaufnahmeteil nach Anspruch 8, **dadurch gekennzeichnet, dass** der Stößel (142) und/oder der Kolben (120) eine gekrümmte Außenfläche umfassen (144, 124), die dazu ausgebildet ist, mit einer zylindrischen Innenfläche (102) des Blockierrings (100) zusammenzuwirken, und dass der Krümmungsradius der gekrümmten Außenfläche (144, 124) des Stößels (142) und/oder des Kolbens (120) im Wesentlichen gleich dem Krümmungsradius der zylindrischen Innenfläche (102) des Blockierrings (100) ist.

10. Schnellkupplungsaufnahmeteil nach einem der Ansprüche 1 bis 3 oder 5 oder 6, **dadurch gekennzeichnet, dass** die Übertragungseinrichtungen eine Stange (126) umfassen, die sich in der Aufnahme (66) des elastischen Rückstellelements (140) durch den Fluidzirkulationskanal (400) bis zu dem Kolben (120) erstreckt.

11. Schnellkupplungsaufnahmeteil nach einem der Ansprüche 1 bis 4, **dadurch gekennzeichnet, dass** das Blockierelement ein äußeres Ende (130) des Kolbens (120) ist, das dazu ausgebildet ist, entlang der Längsachse (X-X') des Kupplungsaufnahmeteils (A) mit einer axialen Fläche (94; 161) des Bedienrings (90; 150; 160) zusammenzuwirken.

12. Schnellkupplungsaufnahmeteil nach einem der vorhergehenden Ansprüche, **dadurch gekennzeichnet, dass** das Blockierelement (100) dazu ausgebildet ist, mit einer axialen Fläche (94) des Bedienrings (90; 150; 160) zusammenzuwirken, wenn sich der Ring (90; 150; 160) in seiner ersten Stellung befindet.

13. Schnellkupplungsaufnahmeteil nach einem der vorhergehenden Ansprüche, **dadurch gekennzeichnet, dass** der Körper (40) einen äußeren Absatz (53) hinter der Aufnahme (64) des Kolbens (120) ausbildet und dass ein äußerer Ring (90; 150; 160) an dem Körper (40) das Blockierelement (100) und den äußeren Absatz (53) im gekuppelten und entkuppelten Zustand der Kupplung (R) sowie während der Kuppel- und Entkuppelbewegung der Kupplung (R) radial überdeckt.

14. Schnellkupplungsaufnahmeteil nach einem der vorhergehenden Ansprüche, **dadurch gekennzeichnet, dass** das Aufnahmeteil ein Ventil (50) zum Verschließen des Kanals (400) umfasst.

15. Schnellkupplung (R) zur Verbindung zweier Druckmittelleitungen, umfassend ein Kupplungsaufnahmeteil (A) nach einem der vorhergehenden Ansprüche und ein komplementäres Kupplungseinsteckteil (B).

## Claims

1. Female quick-connect coupling element (A), for joining two pressurised-fluid pipes, this female coupling element (A) being able to cooperate, along a longitudinal axis (X-X') of the female element (A), with a complementary male coupling element (B), the female coupling element (A) comprising:
- a body (40) through which a fluid-flow conduit (400) passes,
- at least one locking member (60; 70) able to move between a locking position of the male element (B) with respect to the body (40) of the female coupling element (A) in a coupled configuration of the coupling, and a release position, in which the female and male elements (A, B) of the coupling can be uncoupled,
- a control ring (90; 150; 160) able to move in translation along the longitudinal axis (X-X') between a first position in which each locking member (60; 70) is held in its locking position, and a second position in which each locking member (60; 70) is able to move into its release position,
- a piston (120) comprising an active surface (122) in fluid contact with said conduit (400) and being able to move sealingly in a housing (64) passing through the body (40) in a transverse direction (Y-Y') from the fluid-flow conduit (400) towards the outside of the body (40), the piston (120) extending from the active surface (122) opposite to the fluid-flow conduit (400),
- a blocking member (100; 130) the movement of which parallel to the transverse direction is integral with the movement of the piston (120),
- the piston (120) being able to move from an internal position in which the blocking member (100; 300) does not block the movement of the control ring (90; 150; 160), to an external position in which the blocking member (100; 130) prevents the translation of the control ring (90; 150; 160) to its second position, and
- at least one element (140) for the elastic return of the piston (120) to its internal position,
**characterised in that**
- the elastic return element (140) is mounted in a housing (66) of the body (40) of the female coupling element (A) situated outside the housing (64) of the piston (120), the housing (66) of the elastic return element (140) being fluidically isolated from the fluid-flow conduit (400), and
- the female coupling element (A) comprises transmission means (100; 126), disposed between the return element (140) and the piston (120), for returning the piston (120) to its internal position.

2. Female quick-connect element according to claim 1, **characterised in that** the housing (66) of the elastic return element (140) is provided in the body (40) opposite to the piston (120) housing (64) with respect to the longitudinal axis (X-X').

3. Female quick-connect element according to one of the preceding claims, **characterised in that** the blocking member (100) comprises a lateral surface (104) suitable for receiving, in surface abutment, along the longitudinal axis (X-X') of the female coupling element (A), an axial surface (94; 161) of the control ring (90; 150; 160).

4. Female quick-connect element according to one of the preceding claims, **characterised in that** said transmission means (100) are mounted outside the body (40) of the female coupling element (A).

5. Female quick-connect element according to one of claims 1 to 3, **characterised in that** the blocking member is a rigid ring (100) surrounding the body (40) and the piston (120).

6. Female quick-connect element according to claim 5, **characterised in that** it comprises a groove (62), provided in an external surface (402) of the body (40), in which the piston housing (64) emerges, and suitable for guiding the blocking ring (100) in the transverse direction (Y-Y') of the female coupling element (A).

7. Female quick-connect element according to one of claims 5 to 6, **characterised in that** said transmission means are formed by the blocking ring (100).

8. Female quick-connect element according to claim 7, **characterised in that** it comprises a pusher (142) disposed between the elastic return element (140) and the blocking ring (100).

9. Female quick-connect element according to claim 8, **characterised in that** the pusher (142) and/or the piston (120) comprise a curvilinear external surface (144, 124) suitable for cooperating with an internal cylindrical surface (102) of the blocking ring (100), and **in that** the radius of curvature of the curvilinear external surface (144, 124) of the pusher (142) and/or of the piston (120) is substantially equal to the radius of curvature of the internal cylindrical surface (102) of the blocking ring (100).

10. Female quick-connect element according to one of claims 1 to 3 or 5 or 6, **characterised in that** said transmission means comprise a rod (126) extending in the housing (66) of the elastic return element (140) as far as the piston (120) through the fluid-flow conduit (400).

11. Female quick-connect element according to one of claims 1 to 4, **characterised in that** the blocking member is an external end (130) of the piston (120) suitable for cooperating, along the longitudinal axis (X-X') of the female coupling element (A), with an axial surface (94; 161) of the control ring (90; 150, 160).

12. Female quick-connect element according to one of the preceding claims, **characterised in that** the blocking member (100) is suitable for cooperating with an axial surface (94) of the control ring (90; 150; 160) when said ring (90; 150; 160) is in its first position.

13. Female quick-connect element according to one of the preceding claims, **characterised in that** the body (40) forms an external shoulder (53) at the rear of the housing (64) of the piston (120), and **in that** a ring (90; 150; 160) external to the body (40) radially covers the blocking member (100) and the external shoulder (53) in coupled and decoupled configurations (R) of the coupling as well as during the manoeuvre of coupling and decoupling the coupling (R).

14. Female quick-connect element according to one of the preceding claims, **characterised in that** it comprises a valve (50) closing off the conduit (400).

15. Quick-connect coupling (R) for joining two pressurised fluid pipes, comprising a female coupling element (A) according to one of the preceding claims and a complementary male coupling element (B).
